Europäisches Patentamt

European Patent Office

Office européen des brevets

(11) Veröffentlichungsnummer: **0 448 186 A2**

# (12) EUROPÄISCHE PATENTANMELDUNG

(21) Anmeldenummer: 91250023.8

(22) Anmeldetag: 30.01.91

(51) Int. Cl.5: **G01N 3/20**

(30) Priorität: 02.02.90 DE 4003596

(43) Veröffentlichungstag der Anmeldung:
25.09.91 Patentblatt 91/39

(84) Benannte Vertragsstaaten:
CH FR GB IT LI NL

(71) Anmelder: **CHR. BERGHÖFER GmbH & Co. KG.**
**Frankfurter Strasse 199**
**W-3500 Kassel(DE)**

(72) Erfinder: **Boden, Kurt**
**Amselweg 2**
**W-3501 Habichtswald(DE)**

(74) Vertreter: **Maikowski, Michael, Dipl.-Ing. Dr. et al**
**Patentanwälte Maikowski & Ninnemann**
**Xantener Strasse 10**
**W-1000 Berlin 15(DE)**

(54) **Verfahren und Vorrichtung zur Untersuchung des Biegeverhaltens von Schläuchen.**

(57) Die Erfindung betrifft ein Verfahren und eine Vorrichtung zur Untersuchung des Biegeverhaltens von Schläuchen 1. Auf die beiden Enden 2 eines mit gestreckter neutraler Linie 4 an Schlauchaufnahmen 7 angeordneten Schlauches 1 werden gleichgroße entgegengesetzte Drehmomente 3 ausgeübt. Die Schlauchaufnahmen 7 sind an Tragarmen 5 drehbar gelagert und die Tragarme 5 sind im einstellbaren Abstand D gelenkig (6) gelagert.

EP 0 448 186 A2

## VERFAHREN UND VORRICHTUNG ZUR UNTERSUCHUNG DES BIEGEVERHALTENS VON SCHLÄUCHEN

Die Erfindung betrifft ein Verfahren zur Untersuchung des Biegeverhaltens von Schläuchen und eine Vorrichtung zur Durchführung des Verfahrens.

Die Untersuchung des Biegeverhaltens von Schläuchen, insbesondere von Metallschläuchen und dabei besonders solchen, die mit Wellungen versehen sind, wird durchgeführt, um Gütenormen für derartige Schläuche festzulegen.

Die ISO/TC5/SC11 WG2.N.2 beschreibt einen Biegetest für Schläuche, bei dem der zu untersuchende Schlauch in Form eines hängenden U in eine Testvorrichtung eingebaut wird. Es wird ein Rollbiegetest in der Weise durchgeführt, daß ein Einbauende des Schlauches horizontal oder vertikal mit einer bestimmten Rate um eine bestimmte Strecke verschoben wird. Durch diese Verschiebung ändert sich die relative Lage der Schlauchenden und die Schlauchform. Bei häufiger Wiederholung stellt sich eine Ermüdung und ein Reibungsverschleiß der Schlauchleitung ein. Diese Prüfung kann mit und ohne Innendruck durchgeführt werden.

Diese Prüfmethode weist den Nachteil auf, daß die sich einstellende Form des Schlauches nicht den für diese Prüfung gemachten Angaben entspricht. Mit den in dieser Vorschrift angegebenen Länge des Schlauches werden die aufgeführten Radien nicht erreicht. Durch das Verschieben der Schenkel beim Test tritt eine Relativbewegung auf, die als Differenz der Biegeradien festgestellt werden kann, die ebenfalls dem in dieser Vorschrift angegebenen Radien nicht entspricht. Die große Länge des Schlauches führt ferner zu einer Instabilität der Schlauchform, so daß definierte Bedingungen nicht mehr während des Testes vorliegen. Während des Testes können sich durch eine Kaltverfestigung der höchstbeanspruchten Stellen die Biegeradien fortlaufend ändern. Eine qualifizierte Aussage, welcher Schlauchabschnitt, welche Belastung getragen hat ist nicht möglich.

Durch die große Schlauchlänge und die erforderliche Bauhöhe des Prüfstandes ist die Prüfung auf Nennweiten bis 100 mm Durchmesser begrenzt.

Der BS 6501:Part 1:1984 beschreibt ein Testverfahren für metallische Wellschläuche. Bei diesem Verfahren wird beim Ermüdungstest ein Schenkel eines U-förmig gebogenen Schlauches auf einer horizontalen Auflage geführt und dem zweiten Schenkel wird eine derartige horizontale Bewegung erteilt, daß die Schlauchform sich ändert. Für diese liegende U-Form besteht ebenfalls eine Einschränkung der Nennweite auf DN 80. Die große Schlauchlänge führt zu einer unerwünschten Instabilität des Schlauches während der Prüfung.

Die DIN 30663 beschreibt zwei Prüfverfahren. Bei dem einen Prüfverfahren erfolgt ein Lateralversatz mit gestreckter Schlauchleitung und bei dem anderen ein Lateralversatz mit gebogener Schlauchleitung.

Beim Lateralversatz mit gestreckter Schlauchleitung wird der Schlauch im gestreckten Zustand in eine Vorrichtung eingebaut, die einen Lateralversatz eines Schlauchendes hervorruft und somit eine Änderung der Schlauchform.

Beim Lateralversatz mit gebogener Schlauchleitung wird der Schlauch als 90 Grad-Bogen eingebaut und ein Ende wird horizontal, vertikal oder sowohl horizontal als auch vertikal bewegt, so daß sich die Schlauchform ändert.

Bei diesen Verfahren treten durch den Verlauf der Biegemomente und Querkräfte in der Schlauchleitung die kleinsten Biegeradien und damit die größte Belastung jeweils am Schlauchende auf. An dieser Stelle ist der Radius jedoch nicht mehr bestimmbar, weil der Schlauch in einem Anschluß mündet. Bei diesem Verfahren sind die tatsächlichen Belastungsdaten und zwar der Biegeradius des höchstbelasteten Schlauchabschnittes nicht feststellbar und damit auch nicht auf andere Einsatzfälle übertragbar.

In der DIN 3384 wird eine Prüfung des biegeelastischen Verhaltens beschrieben, bei dem der Schlauch aus dem gestreckten Zustand auf eine oder zwei spiegelsymmetrische Schablonen mit einem vorgegebenen Krümmungsradius aufgelegt wird, so daß ein 90 Grad-Bogen bzw. zwei derartige Bogen entstehen. Das Aufliegen des Schlauches auf eine Schablone entspricht nicht der üblichen Praxis für den Einbau von Schläuchen. An den Auflagestellen wird eine zusätzliche Belastung der Schlauchleitung erzeugt.

Der Erfindung liegt die Aufgabe zugrunde, ein Verfahren und eine Vorrichtung zur Untersuchung des Biegeverhaltens von Schläuchen, insbesondere gewellten Metallschläuchen zu schaffen, mit denen die Biegeeigenschaften einer Schlauchleitung mit der Aufgabe von definierten Belastungsgrößen, ohne den verfälschenden Einfluß einer Auflage für alle Nennweiten gleichermaßen möglich ist, wobei die Prüfung der ganzen Schlauchlänge mit geringen Kosten in kurzer Zeit durchgeführt werden kann.

Erfindungsgemäß wird diese Aufgabe durch die technische Lehre des Patentanspruchs 1 gelöst.

Mit Vorteil wird durch das erfindungsgemäße Verfahren der Schlauch derart gekrümmt, daß die neutrale Linie des Schlauches sich der elastischen Linie annähert, die durch die Biegesteifigkeit des Schlauches und die aufgebrachten Biegemomente bestimmt wird. Dadurch biegt sich der Schlauch gleichmäßig über seine Länge. In der Schlauchmitte ist der Biegeradius etwas kleiner als an den Schlauchenden. Die maximale Belastung kann durch Messung des Biegeradius leicht festgestellt und erfaßt werden.

Mit Vorteil ist diese Prüfung reproduzierbar.

Die Belastung ist repräsentativ. Die Belastung der Schlauchleitung läßt sich auf einen Biegeradius, gekoppelt mit einem inneren Druck zurückführen. Da die Schläuche im Einsatz gebogen werden und unter Druck stehen, kann diese Biegung durch das erfindungsgemäße Untersuchungsverfahren repräsentiert werden.

In der Praxis weist eine Schlauchleitung, die in eine Vorrichtung, ein Gerät oder in einer Maschine eingebaut wird einen bestimmten Biegeradius auf. Dieser Biegeradius kann gemessen und mit den Ergebnissen des erfindungsgemäßen Verfahrens verglichen werden, so daß eine Lebensdauerberechnung möglich ist. Dadurch besteht die Möglichkeit, eine wichtige Auslegungskenngröße zu ermitteln. Mit Vorteil können die wesentlichen Nennweiten von Schlauchdurchmessern von 8 mm bis 300 mm geprüft werden. Bei diesem Verfahren wird die Schlauchleitung auf der gesamten Länge geprüft. Die meisten der bekannten Prüfungsverfahren ermöglichen lediglich einen eingeschränkten Prüfbereich, d.h. der Schlauch wird nur auf einem kurzen Längenabschnitt höchstbelastet und deshalb nur an dieser Stelle geprüft. Durch die gleichmäßige Biegung wird bei dem erfindungsgemäßen Verfahren der Schlauch auf der ganzen Länge belastet.

Die Kosten für die Prüfung werden vermindert, da insbesondere die Anzahl der Prüfzyklen herabgesetzt wird. Gegenüber dem U-Biegetest sind kleinere Schlauchlängen erforderlich.

Gemäß weiterer Erfindung kann in einfacher Weise eine Untersuchung des Biegeverhaltens von Schläuchen mittels Lateralversetzung dadurch erfolgen, daß auf die Enden des gestreckten Schlauches gleichzeitig gleich gerichtete Drehmomente ausgeübt werden, die den Schlauch auch S-förmig krümmen.

Falls gewünscht oder erforderlich, können mit Vorteil zur Einstellung einer gewünschten oder Korrektur der Krümmung auf die Schlauchenden Zug- oder Druckkräfte ausgeübt werden.

Mit Vorteil werden zur Einstellung einer vorbestimmten Krümmung des Schlauches die von den Momenten erzeugten Verdrehungswinkel der neutralen Linie des Schlauches an dessen Enden auf einen vorbestimmten Wert begrenzt und/oder die Momente auf einem vorbestimmten Wert begrenzt und/oder die Momente mittels eines Biegefühlers am Schlauch gesteuert.

Die Momente werden in einer vorbestimmten Rate (Anzahl der Momentzyklen pro Minute) aufgebracht. Dabei kann die Aufbringung der Momente derart erfolgen, daß jeweils ein Ausschlag nur nach einer Seite beispielsweise nur nach oben oder nur nach unten erfolgt. Es kann jedoch auch vorteilhaft sein, die Momente als Wechsellasten aufzubringen, so daß ausgehend von einer gestreckten neutralen Linie der Ausschlag nach der einen Seite erfolgt und anschließend ein Ausschlag nach der anderen Seite.

Mit Vorteil wird das Verfahren so durchgeführt, daß die Enden des Schlauches auf zwei zueinander symmetrischen Führungsbahnen gegeneinander geführt werden. Eine besonders einfache Ausführungsform des Verfahrens wird dadurch erzielt, daß die Enden des Schlauches auf zwei Kreisbahnen gegeneinander geführt werden.

Es ist Vorgesehen, daß der Schlauch während des Tests mit Druck beaufschlagt wird. Auf diese Weise können bestimmte Belastungsbedingungen simuliert werden. Eine Druckbeaufschlagung kann auch für den Nachweis eines Ermüdungsbruches verwendet werden.

Eine Vorrichtung zur Durchführung des Verfahrens weist zwei in einem einstellbaren Abstand voneinander angelenkte Tragarme auf, von denen jeder eine drehbar gelagerte Schlauchaufnahme trägt, von denen jede mit einem Drehmomentenerzeuger in Antriebsverbindung steht. In der Mitte zwischen den Tragarmen ist senkrecht zur neutralen Linie des gestreckten Schlauches eine Schubstange geführt, an der zwei längsverstell- und/oder auswechselbare Scherarme angelenkt sind, von denen jeweils einer mit einem Tragarm gelenkig verbunden ist. Durch diese Vorrichtung wird in einfachster Weise bei Aufbringung der Momente eine Zwangsführung ermöglicht, durch die die beiden Schlauchenden auf symmetrischen Kreisbahnen aufeinander zugeführt werden.

Zum Einstellen auf unterschiedliche Schlauchlängen wird zumindest ein Tragarm an einem in der Biegeebene des Schlauches verstellbaren Auflager angelenkt. Ferner wird die Führung der Zugstange in der Biegeebene des Schlauches zwischen den Tragarmen verstellbar ausgebildet. Zur Anpassung bei diesen Verstellungen wird das Gelenk an den Scherenarmen längs diesen verstellbar ausgebildet und/oder der Scherenarm längenverstell- und/oder auswechselbar gestaltet.

Mit besonderen Vorteil werden die Enden des Schlauches mit Anschluß- oder Klemmarmaturen ausgerüstet und mit diesen an den Schlauchaufnahmen festgelegt.

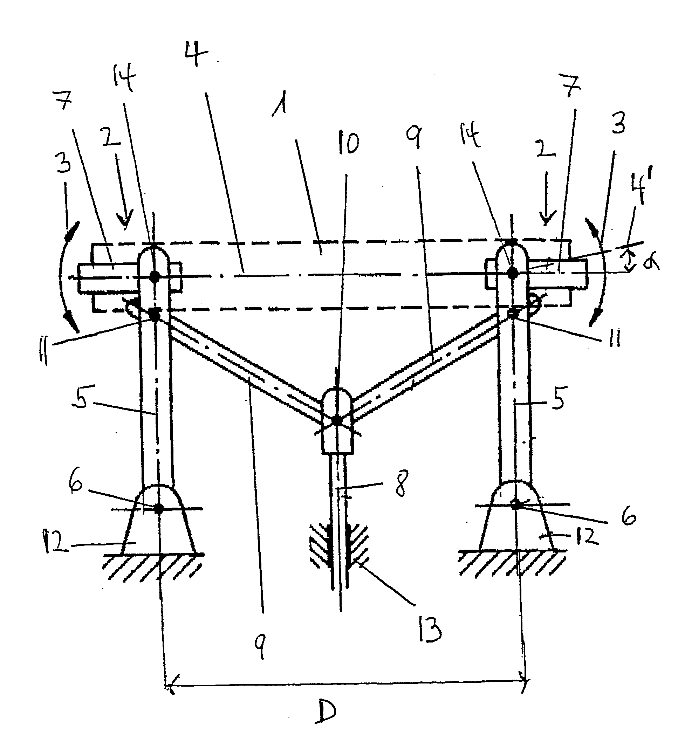

Ein Ausführungsbeispiel der erfindungsgemäßen Vorrichtung soll unter Bezugnahme auf die Zeichnung erläutert werden, die schematisch einer Vorrichtung zur Prüfung von Schläuchen, insbesondere gewellten Metallschläuchen darstellt. Zwei Tragarme 5 sind mittels Gelenken 6 an Auflagern 12 verschwenkbar gelagert, deren gegenseitiger Abstand D einstellbar ist.

An jedem Tragarm 5 ist eine Schlauchaufnahme 7 verdrehbar gelagert. Diese Schlauchaufnahmen 7 stehen mit nicht dargestellten Drehmomentenerzeugern in Antriebsverbindung. An diesen Schlauchaufnahmen 7 ist ein gestreckter Schlauch 1 montiert, dessen neutrale Linie, wie dargestellt, eine gerade gestreckte Form hat.

Die Montage des Schlauches 1 an den Schlauchaufnahmen 7 kann in der Weise erfolgen, daß die Schlauchenden mit Anschluß- oder Klemmarmaturen ausgerüstet werden, die an den Schlauchaufnahmen 7 festgelegt sind.

Eine Zwangsführung wird durch eine Schubstange 8 gebildet, die in einer Führung 13 in der Mitte zwischen den Auflagern 12 fest oder verschiebbar angeordnet ist und eine Schubstange 8 für eine Hin- und Herbewegung senkrecht zur neutralen Linie 4 des gestreckten Schlauches 1 aufnimmt. Die Schubstange 8 trägt zwei bei 10 angelenkte Scherenarme 9. Jeder Scherenarm 9 ist bei 11 an einem Tragarm 5 angelenkt. Für Einstellzwecke sind die Gelenke 11 an den Scherenarmen 9 längst diesen verschiebbar montiert.

Wenn auf die Enden 2 des Schlauches 1 über die Schlauchaufnahmen 7 gleiche entgegengesetzte Drehmomente ausgeübt werden, die beispielsweise die Tendenz haben, die neutrale Linie 4 des Schlauches 1 nach oben oder unten zu verbiegen, so daß die Tragarme 5 nach innen, von der durch die Zugstange 8 und die Scherenarme 9 gebildeten Schere geführt, verschwenkt werden.

## Patentansprüche

1. Verfahren zur Untersuchung des Biegeverhaltens von Schläuchen,

   dadurch gekennzeichnet, daß
   1. auf beide Enden (2) eines gestreckten Schlauches (1) gleichzeitig gleich- oder entgegengerichtete mechanische Momente (3) ausgeübt, und
   2. dabei die Enden (2) des Schlauches (1) auf zumindest einer Führungsbahn aufeinander zugeführt werden.

2. Verfahren nach Anspruch 1,

   dadurch gekennzeichnet, daß
   3. zur Einstellung einer vorbestimmten Krümmung des Schlauches
      a. die von den Momenten (3) erzeugten Verdrehungswinkel (α) der neutralen Linie (4) des Schlauches (1) auf einen vorbestimmten Wert begrenzt werden und/oder
      b. die Momente (3) auf einen vorbestimmten Wert begrenzt werden und/oder
      c. die Momente (3) in Abhängigkeit von Signalen eines Schlauch (1) angebrachten Biegefühlers gesteuert werden.

3. Verfahren nach Anspruch 1 oder 2,

   dadurch gekennzeichnet, daß
   4. auf die Enden (2) des Schlauches (1) zusätzlich eine Druck- oder Zugkraft ausgeübt wird.

4. Verfahren nach mindestens einem der Ansprüche 1 oder 3,

   dadurch gekennzeichnet, daß
   1.1 die Momente (3) in einer vorbestimmten Rate (Anzahl der Momentzyklen pro Minute) aufgebracht werden.

5. Verfahren nach mindestens einem der Ansprüche 1 bis 4,

   dadurch gekennzeichnet, daß
   1.2 die Momente jeweils als Wechsellast aufgebracht werden.

6. Verfahren nach mindestens einem der Ansprüche 1 bis 5,

   dadurch gekennzeichnet, daß
   2.1 die Enden (2) des Schlauches (1) auf zwei zueinander symmetrischen Führungsbahnen gegeneinander geführt werden.

7. Verfahren nach mindestens einem der Ansprüche 1 bis 6,

   dadurch gekennzeichnet, daß
   2.1.1 die Enden (2) des Schlauches (1) auf zwei Kreisbahnen gegeneinander geführt werden.

8. Verfahren nach mindestens einem der Ansprüche 1 bis 7,

   dadurch gekennzeichnet, daß
   4. der Schlauch (1) mit Druck beaufschlagt wird.

9. Vorrichtung zur Durchführung des Verfahrens nach mindestens einem der Ansprüche 1 bis 8,

   gekennzeichnet durch

1. zwei in einem einstellbaren Abstand (D) voneinander angelenkte (6) Tragarme (5), von denen jeder

2. eine drehbar gelagerte (14) Schlauchaufnahme (7) trägt, von denen jede mit einem Drehmomentenerzeuger in Antriebsverbindung steht,

3. einen in der Mitte (D/2) zwischen den Tragarmen (5) senkrecht zur neutralen Linie (4) des gestreckten Schlauches (1) geführte (13) Schubstange (8), an der

4. zwei längenverstell- und/oder auswechselbare Scherenarme (9) angelenkt sind, von denen

5. jeweils eine mit einem Tragarm (5) gelenkig (11) verbunden ist.

10. Vorrichtung nach Anspruch 9,

dadurch gekennzeichnet, daß
3.1 auf die Zugstange (8) in der einen oder anderen Richtung eine Kraft, insbesondere eine Vorspannung einwirkt.

11. Vorrichtung nach Anspruch 9 oder 10,

dadurch gekennzeichnet, daß
1.1 zumindest ein Tragarm (5) an einem in der Biegeebene des Schlauches (1) verstellbaren Auflager (12) angelenkt ist.

12. Vorrichtung nach mindestens einem der Ansprüche 9 bis 11,

dadurch gekennzeichnet, daß
3.1 die Führung (13) der Schubstange (8) in der Biegeebene des Schlauches (1) zwischen den Tragarmen (5) verstellbar ist.

13. Vorrichtung nach mindestens einem der Ansprüche 9 bis 12,

dadurch gekennzeichnet, daß
5.1 das Gelenk (11) an den Scherenarmen (9) längs diesen verstellbar ist.

14. Vorrichtung nach mindestens einem der Ansprüche 9 bis 13,

dadurch gekennzeichnet, daß
6. die Enden (2) des Schlauches (1) mit Anschluß-oder Klemmarmaturen ausgerüstet und mit diesen an den Schlauchaufnahmen (7) festgelegt sind.